# EUROPÄISCHE PATENTSCHRIFT

(11) **EP 4 479 245 B1**
(45) Veröffentlichungstag und Bekanntmachung des Hinweises auf die Patenterteilung: **12.08.2026**
(21) Anmeldenummer: 23705991.0
(22) Anmeldetag: 16.02.2023
(51) Int. Cl.: B32B 1/08, B32B 7/12, B32B 27/08, B32B 27/18, B32B 27/20, B32B 27/32, B32B 27/34

(54) **MINDESTENS DREISCHICHTIGES KUNSTSTOFFROHR**
AT LEAST THREE-LAYERED PLASTIC PIPE
TUYAU EN MATIÈRE PLASTIQUE À AU MOINS TROIS COUCHES

(30) Priorität: 17.02.2022 DE 102022103799
(43) Veröffentlichungstag der Anmeldung: 25.12.2024
(73) Patentinhaber: egeplast international GmbH, 48268 Greven (DE)
(72) Erfinder: STRANZ, Michael, 49078 Osnabrück (DE)
(74) Vertreter: Duda, Rafael Thomas
(86) Internationale Anmeldenummer: PCT/EP2023/053831
(87) Internationale Veröffentlichungsnummer: WO 2023/156499

(56) Entgegenhaltungen:
- EP-A1- 0 470 606
- WO-A1-2015/132306
- US-A1- 2004 058 113

## Beschreibung

Die vorliegende Erfindung betrifft ein mindestens dreischichtiges Kunststoffrohr, welches insbesondere zur Verwendung für den Medientransport von Wasserstoff und/oder von Kohlenwasserstoffen vorgesehen ist. Weiterhin betrifft die vorliegende Erfindung ein Verfahren zur Herstellung einer stoffschlüssigen Verbindung zwischen zwei Abschnitten einer Rohrleitung, die jeweils aus dem erfindungsgemäßen Kunststoffrohr gebildet sind.

In der DE 20 2010 007 084 U1 wird ein mehrschichtiges Kunststoffrohr beschrieben, welches eine innere Grundschicht aus einem vernetzten Polyethylen (PE-X) aufweist, die von einer zweiten Schicht umgeben ist, die aus Anhaftungsgründen einen Haftvermittler enthält. Diese zweite Schicht wird von einer dritten Schicht umhüllt, die als Diffusionssperrschicht ausgebildet ist. Diese dritte Schicht enthält EVOH (Ethylen-Vinyl-Alkohol). Auf dieser dritten Schicht haftet eine dünne äußere Schicht in Form einer dünnen Schutzschicht, wobei diese äußere vierte Schicht aus einem Polyamid besteht. Das bekannte Kunststoffrohr ist vorgesehen für eine unter oder auf Putz Verwendung im Sanitärbereich oder bei Heizungsinstallationen. Das Rohr ist für genormte Pressfittings geeignet, was darauf hindeutet, dass der Anwendungsbereich bei Heizungsrohrleitungen mit geringerem Durchmesser liegt, wie sie üblicherweise für Heizungsinstallationen in Gebäuden verwendet werden. Eine spezifische Eignung eines solchen Kunststoffrohres für den Transport von Wasserstoff oder Kohlenwasserstoffen wird nicht beschrieben.

Bei diesem bekannten Kunststoffrohr wird eine fluiddichte Diffusionssperrschicht aus EVOH als dritte Schicht verwendet. Diese Schicht dient als Sauerstoffsperre für die darunter liegenden Schichten und muss vor mechanischen Belastungen geschützt werden, weshalb man hier eine vierte äußere Schicht als Schutzschicht verwendet.

Die EP 2 558 284 B1 beschreibt ein flexibles Rohr mit unverbundenen Schichten und einer inneren Auskleidung mit mehrschichtigem Aufbau, welcher eine innerste Schicht aus einer Fluorpolymer-Formmasse umfasst, eine Zwischenschicht aus einer Formmasse auf Basis eines olefinischen Polymers, das ausgewählt ist aus Polyethylenen, Polypropylenen und Polystyrolen und auf diese Zwischenschicht ist eine äußere Schicht aus einer Polyamid-Formmasse aufgebracht. In dieser Schrift geht es um flexible Rohre mit unverbundenen Schichten, die in Offshore-Anwendungen für den Transport von Flüssigkeiten, Gasen und Aufschlämmungen eingesetzt werden, insbesondere für Leitungen, die unter Wasser verlegt werden und bei denen über die Länge des Rohres ein sehr hoher oder ein sehr unterschiedlicher Wasserdruck existiert, wie beispielsweise bei Steigleitungen. Diese Rohre haben Armierungsschichten aus spiralförmig angeordneten Stahldrähten oder aus Glasfasern. Das mehrschichtige Kunststoffrohr bildet somit hier nur die innere Auskleidung einer insgesamt aus verschiedenen Materialien bestehenden Rohrleitung. In dieser Schrift wird darauf hingewiesen, dass bei der Verwendung von Polyamid-Schichten bei höheren Temperaturen zunehmend Hydrolyse des Polyamids durch das im Rohöl oder Erdgas enthaltene Prozesswasser eintritt. Aus diesem Grunde wird das aus dieser Schrift bekannte Rohr mit einer inneren Schicht aus einer Fluorpolymer-Formmasse versehen, auf die dann eine Zwischenschicht au einem olefinischen Polymer aufgebracht wird, während nur eine äußere Schicht aus einer Polyamid-Formmasse besteht. Die Schrift enthält keine Ausführungen zur Eignung der bekannten Rohre für den Transport von Wasserstoff.

In der US 2004/0058113 A1 wird ein flexibler Offshore-Schlauch beschrieben. Dieser besteht in einer möglichen Ausführungsvariante aus einer ersten Schicht aus einem Polyamid, die als Diffusionssperrschicht dient, einer zweiten Schicht, die als Haftvermittlerschicht dient und einer dritten Schicht aus einem Polyethylen, wobei die Diffusionssperrschicht aus Polyamid die konzentrisch innerste Schicht bildet.

Aus der WO 2015/132306 A1 ist ein mehrschichtiger Schlauch für den Transport von Flüssigkeiten bekannt, der für den Transport von Kohlenwasserstoffen vorgesehen ist. Dieser umfasst eine Innenschicht, die mindestens ein Polyamid in Mischung mit mindestens einem Elastomer aufweist, eine auf der Innenschickt angeordnete Klebeschicht, sowie eine auf der Klebeschicht angeordnete weitere Schicht aus mindestens einem Polyolefin. Der Schlauch weist eine hohe mechanische Leistungsfähigkeit auf, insbesondere eine hohe Beständigkeit gegenüber dem vom transportierten Fluid ausgeübten Innendruck.

Weiterhin ist aus der EP 0 470 606 A1 eine antistatische, kälteschlagzähe und peroxidstabile Kraftstoffleitung bekannt, die aus mindestens zwei unterschiedlichen Polymerschichten aufgebaut ist, wobei mindestens eine der Schichten mit elektrisch leitenden Additiven modifiziert ist.

HDPE-Rohre (high density Polyethylen) sollen in Zukunft auch für den Transport von Wasserstoff-Gas und/oder einem Gemisch aus Wasserstoff und Erdgas verwendet werden. Dabei stellen sich verschiedene Probleme, die Anlass zu Entwicklungen seitens der Anmelderin gegeben haben, welche zu der vorliegenden Erfindung geführt haben.

Auch neuartige, modifizierte HDPE-Mehrschichtrohre sollen die seit Jahren von Kunden geschätzten Eigenschaften wie beispielsweise den Einsatz von Ringbunden (lange Längen), einfache Verlegung und einfache und bewährte Verbindungstechnik sicherstellen. Der Transport von Wasserstoff-Gas (H₂) in herkömmlichen HDPE-Rohren birgt jedoch die Gefahr, dass eine Diffusion von H₂ aus der Rohrleitung (durch die PE-Rohrwand) heraus ein sicherheitstechnisches Risiko darstellt, denn die Explosionsgrenzen von Wasserstoff im Gemisch mit Sauerstoff und die Zündenergie liegen niedrig. Auch entsteht ein Verluststrom von hochpreisigem H₂-Gas. HDPE hat auf Grund seiner Molekülstruktur und seiner niedrigen Dichte nur eine geringe Sperrwirkung gegen H₂-Gas (anders ist dies bei Erdgas). Eine innenliegende, vollflächig gestaltete Sperrschicht aus Metall wäre eine mögliche Lösung, jedoch droht beim Einsatz von Metallen auch das bekannte Phänomen der Wasserstoffversprödung und die Flexibilität der Rohre geht aufgrund der hohen Steifigkeiten der Metalle weitestgehend verloren, was sich bei der Verlegung als nachteilig erweisen würde und die Verbindungstechnik erheblich erschwert.

Die Aufgabe der vorliegenden Erfindung besteht darin, ein mehrschichtiges Kunststoffrohr zur Verfügung zu stellen, welches eine verbesserte Diffusionsdichtigkeit, insbesondere gegenüber Wasserstoff und/oder Kohlenwasserstoffen, aufweist.

Weiterhin besteht die Aufgabe der vorliegenden Erfindung darin, ein mehrschichtiges Kunststoffrohr zur Verfügung zu stellen, dessen innerste Schicht, die mit dem Medium in Kontakt kommt, chemisch gegenüber Wasserstoff und/oder Kohlenwasserstoffen beständig ist.

Ferner besteht die Aufgabe der vorliegenden Erfindung darin, ein mehrschichtiges Kunststoffrohr zur Verfügung zu stellen, welches sich durch kontinuierliche Extrusion herstellen lässt.

Die Lösung dieser Aufgaben liefert ein mindestens dreischichtiges Kunststoffrohr mit den Merkmalen des Anspruchs 1.

Dieses umfasst wenigstens eine erste Schicht aus einem Polyamid, die als Diffusionssperrschicht dient, wenigstens eine zweite Schicht, die als Haftvermittlerschicht dient und wenigstens eine dritte Schicht aus einem Polyethylen. Erfindungsgemäß ist vorgesehen, dass die Diffusionssperrschicht aus Polyamid die konzentrisch innerste Schicht bildet, dass die Polyethylenschicht eine drucktragende äußere Schicht ist, die aus einem Polyethylen hoher Dichte (HDPE) besteht und dass die zweite Schicht, die als Haftvermittlerschicht dient, zwischen der inneren Diffusionssperrschicht aus Polyamid und der drucktragenden äußeren Schicht aus Polyethylen angeordnet ist.

Der erfindungsgemäße Lösungsansatz beruht auf dem Vorschlag der Verwendung einer polymeren Sperrschicht, die aus einem Polymer mit höherer Dichte als HDPE besteht, chemisch nicht von H₂-Gas (Wasserstoffversprödung) und/oder nicht von Kohlenwasserstoffgasen angegriffen wird und kostengünstig durch kontinuierliche (endlose) Extrusion mit HDPE zu einem Mehrschichtrohr co-extrudiert werden kann.

Solche Eigenschaften bieten verschiedene Polyamide (PA). Deshalb schlägt die Erfindung die Verwendung einer Polyamidschicht als erste innerste Schicht vor.

Da das stoffschlüssige Schweißen von einzelnen Rohren zu Rohrleitungen als sichere und dauerhaft mediendichte Verbindungstechnik gilt, musste im Rahmen der vorliegenden Erfindung eine Mehrschicht-Rohrlösung gefunden werden, die dieses Schweißen ermöglicht. Die beschriebene PA-Innenschicht bietet hier eine Lösungsvariante. Polyamid und HDPE sind jedoch nicht miteinander kompatibel und daher auch nicht miteinander stoffschlüssig zu verschweißen. Im Bereich der Fügezone der Schweißung sollte daher kein Polyamid vorhanden sein, da es Schweißnähten geringer Festigkeiten führen könnte. Es bietet sich daher an, die PA-Schicht vor dem Schweißvorgang an den Rohrenden zu entfernen.

Der nach der Rohrextrusion vorhandene Haftverbund innerhalb der Mehrschichtrohr-Konstruktion entsteht erfindungsgemäß durch eine sogenannte Haftvermittlerschicht als zweite Schicht, die für ausreichend hohe Adhäsion zwischen der ersten inneren Polyamid-Schicht und der drucktragenden äußeren Polyethylen-Schicht sorgt, damit mechanisch die notwendige Stabilität der Rohrkonstruktion gewährleistet ist. Da sich aber aufgrund der chemischen Inkompatibilität der einzelnen Schichten keine stoffschlüssige Verbindung über Schichtgrenzen hinweg ausbilden kann (insbesondere bei der Herstellung mittels Co-extrusion), sind die Schichten durch mechanisches Abarbeiten (Schneiden, Schälen, Fräsen) leicht voneinander trennbar.

Die PA-Schicht kann also im Bereich der Schweißung nachträglich um wenige Millimeter Breite entfernt werden, sodass die HDPE-Schicht problemlos verschweißt werden kann.

Polyamide sind lineare Polymere mit sich regelmäßig wiederholenden Amidbindungen entlang der Hauptkette. Polyamide zeichnen sich neben ihrer hohen Wärmebeständigkeit durch hohe Härte und Steifigkeit aus. Aufgrund der hohen Steifigkeit der Molekülketten haben Polyamide eine geringe Permeabilität und somit gute Barriereeigenschaften gegen die Diffusion von Wasserstoff und Kohlenwasserstoffen.

Weitere vorteilhafte Ausgestaltungen der Erfindung sind in den abhängig formulierten Ansprüchen angegeben. Die in den abhängig formulierten Ansprüchen einzeln aufgeführten Merkmale sind in technologisch sinnvoller Weise miteinander kombinierbar und können weitere Ausgestaltungen der Erfindung definieren. Darüber hinaus werden die in den Ansprüchen angegebenen Merkmale in der Beschreibung näher präzisiert und erläutert, wobei weitere bevorzugte Ausgestaltungen der Erfindung dargestellt werden.

Eine bevorzugte Weiterbildung der vorliegenden Erfindung sieht vor, dass die erste innerste Schicht ein ungefülltes Polyamid umfasst. Am Markt erhältliche gefüllte Polyamide enthalten häufig beispielsweise Glasfasern als Füllstoffe. Derartige Füllstoffstoffe führen zu einer erhöhten Steifigkeit eines Kunststoffrohrs, welches eine Polyamidschicht aufweist. Aufgrund dieser erhöhten Steifigkeit lassen sich solche Rohre nicht gut im Erdreich verlegen. Außerdem wird durch die Füllstoffe die Extrudierbarkeit des Rohrs verschlechtert. Zudem führen Glasfüllstoffe zu einer erhöhten Abrasion an den Maschinenteilen, die beim Extrusionsvorgang mit der Kunststoffschmelze in Kontakt kommen. Schließlich wird auch das Recycling solcher Kunststoffrohre durch die Füllstoffe aufwändiger. Daher ist gemäß einer möglichen Alternative der Erfindung die Verwendung eines ungefüllten Polyamids von Vorteil.

Gemäß einer bevorzugten Weiterbildung der vorliegenden Erfindung sind die mindestens drei Schichten des Kunststoffrohrs flächig fest miteinander verbunden. Diese flächige feste Verbindung der drei Schichten kann man beispielsweise durch die Coextrusion, also die gleichzeitige Extrusion mehrerer Schichten aus den unterschiedlichen Kunststoff-Werkstoffen erreichen. Hier unterscheiden sich die erfindungsgemäßen Kunststoffrohre von denjenigen, die aus dem Stand der Technik gemäß EP 2 558 284 B1 bekannt sind, denn dort handelt es sich um flexible Rohre mit unverbundenen Schichten.

Eine bevorzugte Weiterbildung der vorliegenden Erfindung sieht vor, dass die Haftvermittlerschicht aus einem Copolymer besteht, dessen Molekülstruktur auf einem Polyolefin mit aufgepfropften Maleinsäureanhydridgruppen basiert. Auf diese Art modifizierte Polyolefine haben adhäsive Eigenschaften und eignen sich als Verträglichkeitsvermittler zwischen der radial inneren Schicht aus Polyamid und der drucktragenden äußeren Schicht aus Polyethylen. Die an das Copolymer gebundenen Funktionsgruppen wie beispielsweise MaleinsäureanhydridGruppen (MAH) gehen mit polaren Kunststoffen wie Polyamiden Wasserstoffbrückenbindungen und polare Bindungen ein, wodurch einerseits eine gute Adhäsion mit der inneren Polyamidschicht des mehrlagigen Kunststoffrohrs entsteht. Andererseits entsteht über die Ethylensequenzen in der Kettenstruktur des Haftvermittlers eine Haftung zwischen der Haftvermittlerschicht und dem Polyethylen der drucktragenden äußeren Schicht.

Alternativ kommt als Copolymer für die Haftvermittlerschicht beispielsweise ein Anhydrid-modifiziertes Ethylenacetat in Betracht.

Vorzugsweise umfasst die dritte, drucktragende äußere Schicht des erfindungsgemäßen mindestens dreischichtigen Kunststoffrohres eine HDPE-Schicht aus einem Polyethylen mit einer Dichte im Bereich zwischen 940 und 970 kg/m³ nach ISO 1183. HDPE-Werkstoffe haben nur schwach verzweigte Polymerketten und daher eine höhere Dichte, wodurch sie sich von den LDPE-Werkstoffen abgrenzen, die stark verzweigte Polymerketten und daher eine geringere Dichte aufweisen, die unterhalb der oben genannten Werte liegt. Polyethylene, die Füllstoffe enthalten, weisen wiederum eine höhere Dichte auf als ungefüllte Polyethylene, das heißt die Dichte einer Polyethylenschicht in einem Kunststoffrohr wird unabhängig von der jeweiligen Struktur der Polymerketten auch durch die verwendeten Füllstoffe beeinflusst.

Vorzugsweise umfasst die dritte, drucktragende äußere Schicht ein HDPE mit einer Dimensionierungsspannung für die Langzeitfestigkeit gegen inneren Überdruck (Zeitstandfestigkeit nach ISO 9080) von mindestens 10 N/mm² für mindestens 50 Jahre Betriebsdauer.

Gemäß einer bevorzugten Weiterbildung der vorliegenden Erfindung umfasst die erste, konzentrisch angeordnete Diffusionssperrschicht ein Polyamid mit einer Dichte größer 1.000 und kleiner 1.200 kg/m3 (ISO 1183, 23°C), vorzugsweise ein Polyamid 6, Polyamid 6.6 oder ein Polyamid 12 oder Polyamid 11. Die Herstellung von Polyamid 6 erfolgt aus dem cyclischen Caprolactam und ist ein Homopolyamid, welches sich durch eine einzige Wiederholeinheit [NH-CH₂)₅-CO-] beschreiben lässt. Polyamid 6.6, dessen Herstellung aus Hexamethylentetramin und Adipinsäure erfolgt, ist ebenfalls ein Homopolyamid, welches die Wiederholeinheit
[NH-(CH₂)₆-NH-CO-(CH₂)₄-CO]ₙ aufweist und sich chemisch nur geringfügig von Polyamid 6 unterscheidet. Polyamid 12 wird aus Laurinlactam hergestellt und weist zwischen je zwei Amidgruppen längere Ketteneinheiten mit je 11 Methylengruppen (CH₂) auf. Der Schmelzpunkt von Polyamid 12 liegt um einiges niedriger als derjenige von Polyamid 6, so dass ersteres sich bei der Extrusion gegebenenfalls etwas leichter verarbeiten lässt.

Die konzentrisch angeordnete Diffusionssperrschicht aus Polyamid weist vorzugsweise eine Schichtdicke von zwischen 0,5 mm und 1,5 mm auf. Die genannten Schichtdicken der konzentrisch inneren Polyamidschicht sind dabei in der Regel unabhängig von dem jeweiligen Gesamtdurchmesser und der gesamten Schichtdicke der mehrschichtigen Kunststoffrohres. Dies hängt damit zusammen, dass die Schichtdicke der äußeren drucktragenden Polyethylen-schicht vom Durchmesser der Rohrleitung abhängt und mit zunehmendem Durchmesser zunimmt. Diese Abhängigkeit wird durch die Norm für Polyethylen-Rohre festgelegt. Da es das Anliegen der vorliegenden Erfindung ist, ein normgerechtes mehrschichtiges Kunststoffrohr zur Verfügung zu stellen, richtet sich die Schichtdicke der drucktragenden Polyethylenschicht nach den Vorgaben der einschlägigen Norm. Die als Sperrschicht verwendete innere Polyamidschicht ist für die Druckbelastbarkeit des Kunststoffrohres nicht entscheidend. Daher muss die Schichtdicke der Polyamidschicht nur so groß gewählt werden, dass diese Schicht auch unter den Bedingungen fertigungstechnischer Toleranzen überall eine ausreichende Schichtdicke aufweist, so dass die Sperrwirkung gegen Permeation von Wasserstoff oder Kohlenwasserstoffen erfüllt ist. Die Schichtdicke sollte jedoch andererseits nicht zu hoch gewählt werden, da dann die Sprödigkeit zunimmt. Besonders bevorzugt ist daher vorgesehen, dass die Schichtdicke der konzentrisch inneren Polyamidschicht unabhängig von dem jeweiligen Gesamtdurchmesser des mindestens dreischichtigen Kunststoffrohrs eine konstante Schichtdicke im Bereich zwischen 0,5 mm und 1,5 mm, ganz besonders bevorzugt im Bereich von 0,5 bis 1,0 mm aufweist.

Gemäß einer bevorzugten Weiterbildung der Erfindung ist die konzentrisch angeordnete Diffusionssperrschicht aus Polyamid zur Erhöhung der Sperrwirkung gegen Wasserstoff oder Kohlenwasserstoffe mit Nanofüllstoffen, insbesondere auf Basis von Graphen gefüllt. Bei der Herstellung von Kunststoffrohren werden Füllstoffe beispielsweise zur Erhöhung der Festigkeit verwendet. Bei der Verwendung herkömmlicher Makrofüllstoffe geht dies jedoch häufig mit einer Abnahme der Bruchzähigkeit einher. Nanofüllstoffe haben im Vergleich dazu den Vorteil, dass sie die mechanischen Eigenschaften des Kunststoffs verbessern, ohne die Grundeigenschaften des Kunststoff-Werkstoffs zu verschlechtern. Als Nanofüllstoffe kommen im Rahmen der vorliegenden Erfindung insbesondere funktionalisierte Graphene in Betracht, wie beispielsweise solche auf Basis von thermisch reduziertem Graphenoxid (TRGO), die sich in die Kunststoffschmelze einarbeiten lassen. Bei derartigen funktionalisierten Graphenen handelt es sich um plättchenförmige Füllstoffe, die sich gut in einer Kunststoffschmelze dispergieren lassen. Die plättchenförmigen Partikel weisen eine sehr geringe Ausdehnung senkrecht zur Ausdehnungsrichtung der Schicht auf und können bis hin zu atomar einlagigen Schichten vorliegen. Die flächige Ausdehnung in den beiden Ausdehnungsrichtungen der Fläche kann hingegen um ein Vielfaches größer sein als die Ausdehnung senkrecht zur Schicht eines Partikels. Allerdings muss man nach der Zugabe der Füllstoffe zu einer Kunststoffschmelze auf eine gute homogene Durchmischung achten, bevor die Extrusion erfolgt.

Graphenoxid lässt sich beispielsweise relativ kostengünstig durch Oxidation von Graphit und anschließende thermische Reduktion herstellen. Vorteilhaft für die Erhöhung der Sperrwirkung gegen Diffusion ist, dass der schiefer-artige Aufbau von Graphit durch die Oxidation und anschließende Reduktion zu TRGO aufgespalten wird und so einzelne Plättchen mit einer Dicke von wenigen Nanometern entstehen, die in eine Polymermatrix fein verteilt eingemischt werden können. Auf diese Weise entsteht eine Art Labyrinth, das den Diffusionsweg für das Permeat (hier insbesondere H₂-Moleküle) verlängert.

Vorzugsweise verwendet man Nanofüllstoffe, bei denen es sich um Graphene oder funktionalisierte bzw. modifizierte Graphene in Plättchenform handelt, deren Schichtdicke bevorzugt nur wenige Nanometer aufweist, wobei das Graphen oder funktionalisierte oder modifizierte Graphen in diesen Plättchen beispielsweise in einer Monolage vorliegen kann. Alternativ ist jedenfalls bevorzugt die Schichtdicke der Graphen-Plättchen sehr gering und liegt im Bereich von weniger als etwa 100 nm, insbesondere bei weniger als etwa 20 nm.

Bevorzugt ist in diesem Zusammenhang vorgesehen, dass die Diffusionssperrschicht aus Polyamid 1,0 bis 20,0 Gew.-% des Nanofüllstoffs, mehr bevorzugt 1,0 bis 15,0 Gew.-% des Nanofüllstoffs, und am meisten bevorzugt 3,0 bis 10,0 Gew.-% des Nanofüllstoffs umfasst.

Gemäß einer bevorzugten Weiterbildung der vorliegenden Erfindung ist die drucktragende äußere Polyethylenschicht mindestens zweilagig ausgebildet und umfasst spiralförmig aufgewickelte Verstärkungsbänder aus einem orientierten Polyethylen. Durch die Verwendung derartiger Verstärkungsbänder, welche aus einem verstreckten und somit in der Regel in Längsrichtung orientierten Polyethylen bestehen und die auf eine Schicht aus Polyethylen insbesondere spiralförmig aufgewickelt werden, kann man eine erhöhte Druckfestigkeit der äußeren Polyethylenschicht des erfindungsgemäßen Kunststoffrohres erzielen.

Gemäß einer beispielhaften alternativen Variante der Erfindung kann man auch die drucktragende äußere Polyethylenschicht mindestens zweilagig ausbilden und spiralförmig aufgewickelte und mit Glasfasern armierte Verstärkungsbänder aus Polyethylen verwenden, um eine erhöhte Druckfestigkeit der äußeren Polyethylenschicht zu erreichen.

Vorzugsweise werden wie bereits oben erwähnt mindestens die erste innere Schicht aus Polyamid, die Haftvermittlerschicht und die drucktragende äußere dritte Schicht des erfindungsgemäßen Kunststoffrohres gemeinsam in einem Coextrusionsverfahren hergestellt, wodurch eine feste flächige Verbindung der drei Schichten erzielt wird. Gemäß einer bevorzugten Weiterbildung der Erfindung kann das Kunststoffrohr eine oder mehrere weitere Armierungsschichten aufweisen, die auf das coextrudierte dreischichtige Kunststoffrohr nachträglich aufgebracht sind. Das erfindungsgemäße Kunststoffrohr kann somit mehr als drei Schichten aufweisen und diese optionalen Zusatzschichten können durch verschiedene geeignete Methoden nach der Coextrusion der drei Schichten aufgebracht werden, beispielsweise, um durch eine Schutzschicht die mechanischen Eigenschaften des Kunststoffrohres wie Druckfestigkeit, Abriebfestigkeit, Witterungsbeständigkeit, Rissbeständigkeit, Beständigkeit gegen Säuren, Laugen oder sonstige aggressive Medien oder dergleichen zu verbessern. Somit kann das erfindungsgemäße Kunststoffrohr beispielsweise insgesamt vierschichtig oder fünfschichtig sein oder aus einer noch größeren Anzahl von Schichten aus unterschiedlichen Werkstoffen und jeweils spezifischen Eigenschaften bestehen.

In der Praxis kommt es häufig vor, dass zwei Abschnitte einer Kunststoffrohrleitung durch einen Schweißvorgang miteinander verbunden werden müssen. Besteht die Kunststoffrohrleitung aus mehreren Schichten aus unterschiedlichen Werkstoffen, die miteinander nicht schweißkompatibel sind, dann ist es nach dem Stand der Technik nicht ohne weiteres möglich, durch Schweißen eine stoffschlüssige Verbindung zwischen den Abschnitten der Rohrleitung aus Kunststoff herzustellen. Gegenstand der vorliegenden Erfindung ist weiterhin ein Verfahren, welches die Herstellung einer stoffschlüssigen Verbindung zwischen zwei Abschnitten einer Rohrleitung der oben beschriebenen Art ermöglicht, welche jeweils aus mindestens dreischichtigem Kunststoffrohr bestehen, wobei erfindungsgemäß die konzentrisch angeordnete Diffusionssperrschicht aus Polyamid der beiden Abschnitte der Rohrleitung werksseitig oder baustellenseitig jeweils an den Rohrenden entfernt, insbesondere zurückgeschnitten wird und danach vorzugsweise durch Heizelement-Stumpfschweißen eine stoffschlüssige Verbindung der HDPE-Schichten der beiden Abschnitte der Rohrleitung hergestellt wird.

Wenn in der vorliegenden Anmeldung davon die Rede ist, dass die Schichten des mindestens dreischichtigen Rohres "flächig fest" miteinander verbunden sind, dann bedeutet dies, dass es sich jeweils um eine haftende vollflächige Verbindung der hohlzylindrischen inneren Fläche der radial äußeren Schicht auf der zylindrischen äußeren Fläche der radial inneren Schicht handelt, die sich dadurch erreichen lässt, dass die Schichten bei der Herstellung des Kunststoffrohres coextrudiert werden. Zwar weisen beispielsweise Polyamid und Polyethylen unterschiedlich polare Polymerstrukturen auf, die flächig feste Verbindung wird aber durch die zwischen diesen angeordnete Haftvermittlerschicht unterstützt. Dennoch gehen die beiden Phasen Polyamid und Polyethylen bei der Coextrusion keine "stoffschlüssige" Verbindung ein, wie sie zwischen chemisch ähnlichen Kunststoffschichten, zum Beispiel zwei Polyethylenen möglich ist. Bei einer solchen stoffschlüssigen Verbindung zweier durch Extrusion hergestellter Schichten, dringen mikroskopisch gesehen im Grenzbereich Anteile der einen Kunststoffphase in die andere Kunststoffphase ein, so dass sich quasi eine "Verzahnung" ergibt und keine klare Phasengrenze zwischen den aneinandergrenzenden Kunststoffschichten existiert. Bei einer solchen stoffschlüssigen Verbindung ist ein Abschälen der äußeren Schicht zwecks Herstellung einer Schweißverbindung nicht möglich. Bei der erfindungsgemäßen "flächig festen" Verbindung der Schichten, die durch Coextrusion erreicht werden kann, existiert hingegen eine klare Phasengrenze zwischen den aufeinander haftenden Schichten, so dass es später möglich ist, bei Aufwendung von Kraft eine äußere Schicht von einer inneren Schicht mechanisch abzulösen. Dadurch wird ein Abschälen einer äußeren Schicht möglich. Gleichwohl sind die Schichten im gewöhnlichen Gebrauch einer Rohrleitung, beispielsweise bei deren Verlegung fest miteinander verbunden und die Schichten eines beispielsweise dreischichtigen Rohrabschnitts bilden eine feste Einheit.

Die Erfindung sowie das technische Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung und/oder Figuren zu kombinieren. Insbesondere ist darauf hinzuweisen, dass die Figuren und insbesondere die dargestellten Größenverhältnisse nur schematisch sind. Gleiche Bezugszeichen bezeichnen gleiche Gegenstände, so dass ggf. Erläuterungen aus anderen Figuren ergänzend herangezogen werden können. Dabei zeigen:
Figur 1 eine perspektivische Darstellung eines teilweise aufgeschnittenen dreischichtigen Rohres gemäß einer beispielhaften Ausführungsvariante der vorliegenden Erfindung; und
Figur 2 eine perspektivische Darstellung eines weiteren mehrschichtigen Rohres gemäß einer alternativen beispielhaften Ausführungsvariante der vorliegenden Erfindung.

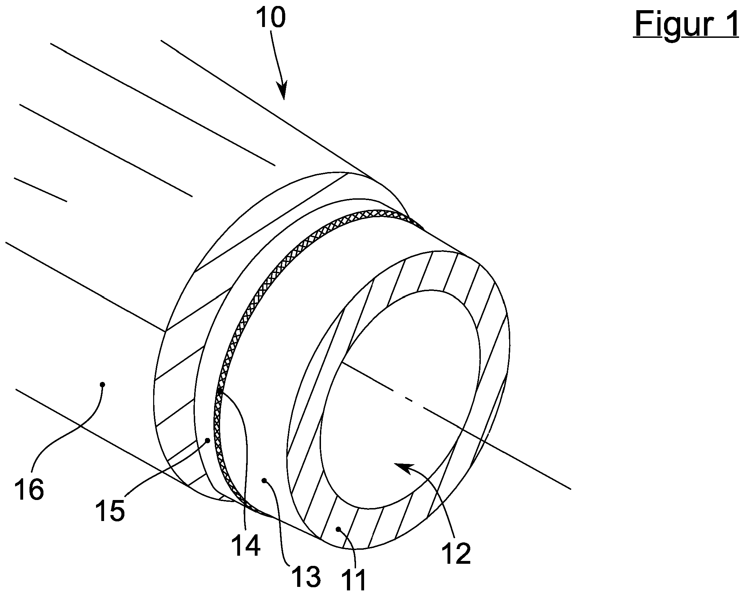

In Figur 1 ist perspektivisch ein Abschnitt eines dreischichtigen Kunststoffrohrs dargestellt, welches insgesamt mit dem Bezugszeichen 10 bezeichnet ist. Derartige Kunststoffrohre sind vorzugsweise für den Medientransport mit Betriebsdrücken von mindestens 10 bar oder größer vorgesehen, beispielsweise mit Betriebsdrücken von mindestens 16 bar oder mehr.

Das Kunststoffrohr 10 umfasst eine konzentrisch radial innen liegende erste Schicht 11 aus einem Polyamid, welche als Diffusionssperrschicht gegen die Permeation von Wasserstoff oder Kohlenwasserstoffen dient, die durch das Lumen 12 des Kunststoffrohres 10 transportiert gefördert werden. Eine derartige Diffusionssperrschicht kann vorzugsweise eine Schichtdicke von 0,5 mm aufweisen. Auf die äußere Oberfläche 13 der innen liegenden ersten Schicht 11 ist eine zweite Schicht aufgebracht, bei der es sich um eine Haftvermittlerschicht 14 handelt. Die Haftvermittlerschicht 14 hat in der Regel eine geringere Schichtdicke als die innere Schicht 11 aus Polyamid, wobei die in der Zeichnung dargestellten relativen Verhältnisse der Schichtdicken der einzelnen Schichten die Verhältnisse nur beispielhaft wiedergeben und keine Festlegung auf bestimmte maßliche Verhältnisse der Schichtdicken aus der Darstellung abgeleitet werden können.

Auf die äußere Oberfläche 15 der Haftvermittlerschicht 14 ist radial außenseitig eine dritte Schicht 16 aufgebracht, bei der es sich um eine drucktragende äußere Schutzschicht aus einem HDPE (high density Polyethylen) handelt. Alle drei Schichten 11, 14, 16 können in einem Arbeitsgang coextrudiert werden. Dazu verwendet man ein Werkzeug, welches mehrere konzentrisch zueinander liegende Ringschlitzdüsen aufweist, aus denen die jeweilige Kunststoffschmelze für die entsprechende Schicht austritt.

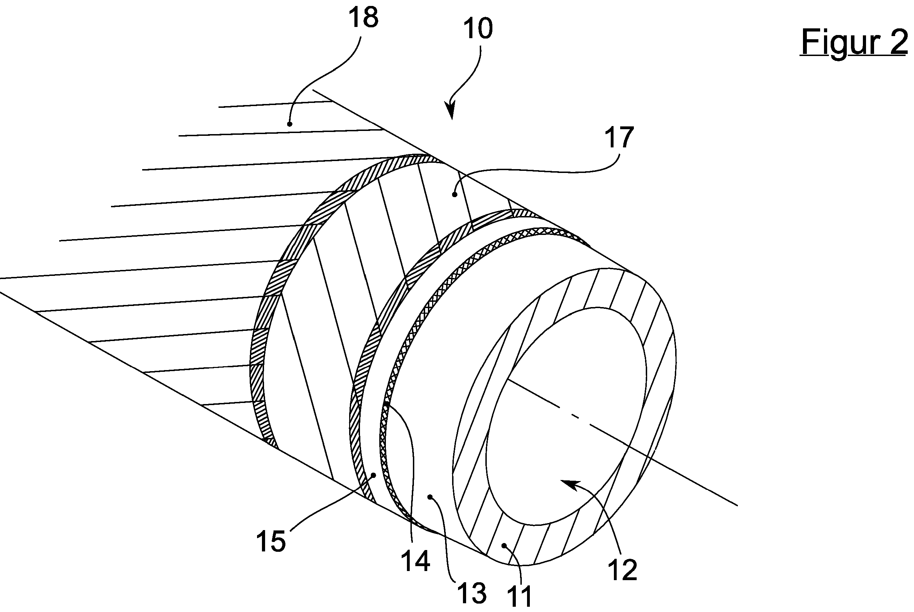

Nachfolgend wird unter Bezugnahme auf die Figur 2 ein alternatives Ausführungsbeispiel der vorliegenden Erfindung erläutert. Bei dieser Variante ist die drucktragende äußere Polyethylenschicht mindestens zweilagig ausgebildet und umfasst spiralförmig aufgewickelte Verstärkungsbänder 17, 18 aus einem orientierten Polyethylen. Ein solches orientiertes Polyethylen kann man beispielsweise durch Verstrecken eines Kunststoffbandes erhalten, wodurch dieses eine Verstreckung in Längsrichtung erhält und dadurch anisotrope Eigenschaften aufweist. Dabei kann man beispielsweise so vorgehen, dass man Kunststoffbänder mit flachem rechteckigem Querschnitt extrudiert und anschließend verstreckt (in Längsrichtung dehnt). Ein derart verstrecktes Kunststoffband kann man danach in einem spitzen Winkel von beispielsweise etwa 54 ° zur Längsachse spiralförmig um ein zuvor coextrudiertes zweischichtiges Kunststoffrohr wickeln. Bei diesem Aufwickeln von Verstärkungsbändern 17, 18 kann man alternativ auch andere Winkel verwenden von beispielsweise etwa 80 ° oder etwa 90 ° zur Rohrlängsachse.

In Figur 2 ist ein beispielhaftes Kunststoffrohr 10 perspektivisch dargestellt, dessen beide innere Schichten im Prinzip analog aufgebaut sind wie in dem Ausführungsbeispiel von Figur 1. Dies bedeutet, es ist eine konzentrisch innere erste Schicht aus Polyamid vorhanden, die als Diffusionssperrschicht 11 dient. Auf diese Diffusionssperrschicht 11 ist eine Haftvermittlerschicht 14 aufgebracht, bei der es sich beispielsweise um eine Schicht aus einem Copolymeren handelt, dessen Molekülstruktur auf einem Polyolefin mit aufgepfropften Maleinsäureanhydridgruppen basiert. Auf diese Haftvermittlerschicht wurden dann in einem spitzen Winkel zur Rohrlängsachse Kunststoffbänder 17 aus einem verstreckten Polyethylen wie oben erläutert aufgewickelt, derart, dass die Kunststoffbänder 17 jeweils nebeneinander liegend in Bahnen angeordnet sind, so wie dies in Figur 2 erkennbar ist. Diese Kunststoffbänder 17 bilden eine erste Lage einer Verstärkungsschicht aus Polyethylen, auf die dann im Anschluss eine zweite Lage von Kunststoffbändern 18 aufgewickelt wird, welche in gleicher Weise in einem spitzen Winkel zur Rohrachse spiralförmig gewickelt werden, jedoch in einem entgegengesetzten Drehsinn zur ersten Lage gewickelt, so dass die Kunststoffbänder 18 aus der zweiten Lage sich mit denjenigen der ersten Lage 17 jeweils kreuzen. Da die Kunststoffbänder (Verstärkungsbänder) 17, 18 jeweils aus einem zuvor gestreckten Polyethylen bestehen, ziehen sie sich zusammen und so wird eine drucktragende äußere (in diesem Fall zweilagige) Schicht aus Polyethylen mit hoher Druckfestigkeit geschaffen.

Die beiden Lagen aus den Verstärkungsbändern 17 und 18 ersetzen somit in dem Ausführungsbeispiel gemäß Figur 2 die drucktragende äußere Schicht 16 gemäß der Variante von Figur 1. In dem Beispiel gemäß Figur 2 werden somit nur die beiden Schichten 11, und 14 durch Coextrusion hergestellt, das heißt die Diffusionssperrschicht 11 und die Haftvermittlerschicht 14. Bei dieser Variante kann man über die beiden Schichten aus den Lagen von Verstärkungsbändern 17 und 18 gegebenenfalls noch beispielsweise durch Aufextrudieren eine weitere, in der Zeichnung nicht dargestellte, äußere Deckschicht aufbringen, beispielsweise wenn eine glattere äußere Oberfläche gewünscht ist oder eine höhere Abriebfestigkeit.

### Beispiel

Zur Feststellung der Effektivität der Sperrwirkung der Diffusionssperrschicht wurden von der Anmelderin im Rahmen der vorliegenden Erfindung Versuche durchgeführt, bei denen ein PE-Rohr mit einer konzentrisch inneren Diffusionssperrschicht aus jeweils unterschiedlichen Polyamiden mit einem PE-Rohr ohne diese Diffusionssperrschicht verglichen wurde, wobei sämtliche Prüfkörper aus dem gleichen HDPE Material gefertigt wurden. Im Einzelnen wurden die unterschiedlichen Rohrkonstruktionen gemäß Tab. 1 auf ihre jeweiligen Permeationseigenschaften hin untersucht. Als Maß zum Vergleich der unterschiedlichen Rohrkonstruktionen wurde der Permeationskoeffizient für Wasserstoff ermittelt.

Zur Vorbereitung der jeweiligen Prüfkörper wurden diese einseitig mit einer Kappe verschlossen. Die offene Rohrseite wurde mit einem Losflansch versehen und mit einem Blindflansch verschlossen. Über Messanschlüsse im Blindflansch konnten die Prüfkörper mit dem Medium sodann befüllt werden. Gleichzeitig wurde dadurch eine permanente Druckkontrolle für konstante Untersuchungsbedingungen gewährleistet. Die Prüfkörper wurden über einen Zeitraum von 6 Wochen konditioniert. Bei der Konditionierung wurde der Kunststoff so lange mit dem Permeat gesättigt (H2-Gas), bis sich eine stationäre Phase und damit eine konstante Permeationsrate eingestellt hat. Für die Konditionierungsbedingungen wurden folgende Parameter gewählt:
- Druck: 10 bzw. 16 bar;
- Temperatur: 20 - 22 °C;
- Medium: Wasserstoff 5.0;
- Dauer: 6 Wochen.

Nach Abschluss der Konditionierung wurden die Prüfkörper auf den entsprechenden Prüfdruck eingestellt und in spezielle Permeationsmesszellen eingespannt. Während der Untersuchung wurden den Messzellen in regelmäßigen Abständen Gasproben entnommen und in einem Gaschromatographen (GC) analysiert. Die Gaszusammensetzung gab Aufschluss darüber, wie viel Permeat die Rohrwand durchdrungen und sich in der Messzelle aufkonzentriert hatte.

**Tab. 1:**

| **Rohrkonstruktion / Prüfkörper** | **Permeationskoeffizient [(cm³** * **mm)/(m²*bar*Tag)]** |
|---|---|
| Einschichtrohr PE100 RC (Vergleichsbeispiel) | 138 |
| Mehrschichtrohr PE100 RC + 0,5 mm PA6 | 100 |
| Mehrschichtrohr PE100 RC + 0,5 mm PA12 | 92 |
| Mehrschichtrohr PE100 RC + 0,5 mm PA6.6 | 62 |
| Mehrschichtrohr PE100 RC + 0,5 mm PA6.6 + 10 Gew.-% Graphen | 50 |

Wie den Ergebnissen zu entnehmen ist, zeigen die erfindungsgemäßen Rohrkonstruktionen im Vergleich zu einem PE-Rohr ohne Diffusionssperrschicht auf Basis des Polyamids eine um bis zum 65 % reduzierte Wasserstoffpermeation.

### Bezugszeichenliste

- 10: dreischichtiges Kunststoffrohr
- 11: erste konzentrisch innenliegende Schicht aus Polyamid, Diffusionssperrschicht
- 12: Lumen des Kunststoffrohrs
- 13: äußere Oberfläche der ersten inneren Schicht
- 14: Haftvermittlerschicht, zweite Schicht
- 15: äußere Oberfläche der Haftvermittlerschicht
- 16: dritte, drucktragende äußere Schicht aus Polyethylen
- 17: Verstärkungsbänder
- 18: Verstärkungsbänder

## Patentansprüche

1. Mindestens dreischichtiges Kunststoffrohr (10) umfassend wenigstens eine erste Schicht aus einem Polyamid (11), die als Diffusionssperrschicht dient, wenigstens eine zweite Schicht, die als Haftvermittlerschicht (14) dient und wenigstens eine dritte Schicht (16) aus einem Polyethylen, wobei die Diffusionssperrschicht (11) aus Polyamid die konzentrisch innerste Schicht bildet, die Polyethylenschicht (16) eine drucktragende äußere Schicht ist, die aus einem Polyethylen hoher Dichte (HDPE) besteht und dass die zweite Schicht, die als Haftvermittlerschicht (14) dient, zwischen der inneren Diffusionssperrschicht (11) aus Polyamid und der drucktragenden äußeren Schicht (16) aus Polyethylen angeordnet ist
**dadurch gekennzeichnet, dass**
die konzentrisch angeordnete Diffusionssperrschicht (11) aus Polyamid eine Schichtdicke von zwischen 0,5 mm und 1,5 mm aufweist, und die dritte, drucktragende äußere HDPE-Schicht (16) eine Schichtdicke aufweist, welche mindestens das Doppelte der Schichtdicke der Diffusionssperrschicht (11) beträgt.

2. Mindestens dreischichtiges Kunststoffrohr nach Anspruch 1, **dadurch gekennzeichnet, dass** die erste innerste Schicht (11) ein ungefülltes Polyamid umfasst.

3. Mindestens dreischichtiges Kunststoffrohr (10) nach Anspruch 1 oder 2, **dadurch gekennzeichnet, dass** die mindestens drei Schichten (11, 14, 16) des Kunststoffrohrs (10) flächig fest miteinander verbunden sind.

4. Mindestens dreischichtiges Kunststoffrohr (10) nach einem der Ansprüche 1 bis 3, **dadurch gekennzeichnet, dass** die Haftvermittlerschicht (14) aus einem Copolymer besteht, dessen Molekülstruktur auf einem Polyolefin mit aufgepfropften Maleinsäureanhydridgruppen basiert oder einem Copolymer aus einem Polyolefin mit einem Anhydrid-modifizierten Ethylenvinylacetat.

5. Mindestens dreischichtiges Kunststoffrohr (10) nach einem der Ansprüche 1 bis 4, **dadurch gekennzeichnet, dass** die dritte, drucktragende äußere Schicht (16) eine HDPE-Schicht aus einem Polyethylen mit einer Dichte im Bereich zwischen 940 und 970 kg/m³ nach ISO 1183 umfasst.

6. Mindestens dreischichtiges Kunststoffrohr (10) nach einem der Ansprüche 1 bis 5, **dadurch gekennzeichnet, dass** die dritte, drucktragende äußere Schicht (16) ein HDPE mit einer Dimensionierungsspannung für die Langzeitfestigkeit gegen inneren Überdruck (Zeitstandfestigkeit nach ISO 9080) von mindestens 10 N/mm² für mindestens 50 Jahre Betriebsdauer umfasst.

7. Mindestens dreischichtiges Kunststoffrohr (10) nach einem der Ansprüche 1 bis 6, **dadurch gekennzeichnet, dass** die erste, konzentrisch angeordnete Diffusionssperrschicht (11) ein Polyamid mit einer Dichte größer 1.000 und kleiner 1.200 kg/m3 (ISO 1183, 23°C), vorzugsweise ein Polyamid 6, Polyamid 6.6 oder ein Polyamid 12 oder Polyamid 11 umfasst.

8. Mindestens dreischichtiges Kunststoffrohr (10) nach einem der Ansprüche 1 bis 7, **dadurch gekennzeichnet, dass** die konzentrisch angeordnete Diffusionssperrschicht (11) aus Polyamid zur Erhöhung der Sperrwirkung gegen Wasserstoff oder Kohlenwasserstoffe mit Nanofüllstoffen, insbesondere auf Basis von Graphen gefüllt ist.

9. Mindestens dreischichtiges Kunststoffrohr (10) nach einem der Ansprüche 1 bis 8, **dadurch gekennzeichnet, dass** die drucktragende äußere Polyethylenschicht (16) mindestens zweilagig ausgebildet ist und spiralförmig aufgewickelte Verstärkungsbänder (17, 18) aus einem orientierten Polyethylen umfasst.

10. Mindestens dreischichtiges Kunststoffrohr (10) nach einem der Ansprüche 1 bis 9, **dadurch gekennzeichnet, dass** die drucktragende äußere Polyethylenschicht (16) mindestens zweilagig ausgebildet ist und spiralförmig aufgewickelte und mit Glasfasern armierte Verstärkungsbänder (17, 18) aus Polyethylen umfasst.

11. Mindestens dreischichtiges Kunststoffrohr (10) nach einem der Ansprüche 1 bis 10, **dadurch gekennzeichnet, dass** mindestens die erste innere Schicht (11) aus Polyamid, die Haftvermittlerschicht (14) und die drucktragende äußere dritte Schicht (16) gemeinsam in einem Coextrusionsverfahren hergestellt sind.

12. Mindestens dreischichtiges Kunststoffrohr (10) nach Anspruch 11, **dadurch gekennzeichnet, dass** dieses eine oder mehrere weitere Armierungsschichten aufweist, die auf das coextrudierte dreischichtige Kunststoffrohr (10) nachträglich aufgebracht sind.

13. Verfahren zur Herstellung einer stoffschlüssigen Verbindung zwischen zwei Abschnitten einer Rohrleitung jeweils bestehend aus mindestens dreischichtigem Kunststoffrohr (10) nach einem der Ansprüche 1 bis 12, **dadurch gekennzeichnet, dass** die konzentrisch angeordnete Diffusionssperrschicht (11) aus Polyamid der beiden Abschnitte der Rohrleitung werksseitig oder baustellenseitig jeweils an den Rohrenden entfernt, insbesondere zurückgeschnitten wird und danach vorzugsweise durch Heizelement-Stumpfschweißen eine stoffschlüssige Verbindung der dritten äußeren HDPE-Schichten (16) der beiden Abschnitte der Rohrleitung hergestellt wird.

## Claims

1. At least three-layered plastic pipe (10) comprising at least a first layer made of a polyamide (11) which serves as a diffusion barrier layer, at least a second layer which serves as an adhesion promoter layer (14), and at least a third layer (16) made of a polyethylene, wherein the diffusion barrier layer (11) made of polyamide forms the concentrically innermost layer, the polyethylene layer (16) is a pressure-bearing outer layer which consists of a high-density polyethylene (HDPE), and that the second layer, which serves as an adhesion promoter layer (14), is arranged between the inner diffusion barrier layer (11) made of polyamide and the pressure-bearing outer layer (16) made of polyethylene,
**characterized in that**
the concentrically arranged diffusion barrier layer (11) made of polyamide has a layer thickness of between 0.5 mm and 1.5 mm, and the third, pressure-bearing outer HDPE layer (16) has a layer thickness which is at least twice the layer thickness of the diffusion barrier layer (11).

2. At least three-layered plastic pipe (10) according to claim 1, **characterized in that** the first innermost layer (11) comprises an unfilled polyamide.

3. At least three-layered plastic pipe (10) according to claim 1 or 2, **characterized in that** the at least three layers (11, 14, 16) of the plastic pipe (10) are bonded to one another in an areal, firm manner.

4. At least three-layered plastic pipe (10) according to any one of claims 1 to 3, **characterized in that** the adhesion promoter layer (14) consists of a copolymer whose molecular structure is based on a polyolefin with grafted maleic anhydride groups, or of a copolymer consisting of a polyolefin with an anhydride-modified ethylene-vinyl acetate.

5. At least three-layered plastic pipe (10) according to any one of claims 1 to 4, **characterized in that** the third, pressure-bearing outer layer (16) comprises an HDPE layer made of a polyethylene with a density in the range between 940 and 970 kg/m³ according to ISO 1183.

6. At least three-layered plastic pipe (10) according to any one of claims 1 to 5, **characterized in that** the third, pressure-bearing outer layer (16) comprises an HDPE with a design stress for long-term strength against internal overpressure (creep rupture strength according to ISO 9080) of at least 10 N/mm² for at least 50 years of operating life.

7. At least three-layered plastic pipe (10) according to any one of claims 1 to 6, **characterized in that** the first, concentrically arranged diffusion barrier layer (11) comprises a polyamide with a density greater than 1,000 and less than 1,200 kg/m³ (ISO 1183, 23°C), preferably a polyamide 6, polyamide 6.6, or a polyamide 12 or polyamide 11.

8. At least three-layered plastic pipe (10) according to any one of claims 1 to 7, **characterized in that** the concentrically arranged diffusion barrier layer (11) made of polyamide is filled with nanofillers, in particular based on graphene, to increase the barrier effect against hydrogen or hydrocarbons.

9. At least three-layered plastic pipe (10) according to any one of claims 1 to 8, **characterized in that** the pressure-bearing outer polyethylene layer (16) is designed to be at least two-layered and comprises spirally wound reinforcing tapes (17, 18) made of an oriented polyethylene.

10. At least three-layered plastic pipe (10) according to any one of claims 1 to 9, **characterized in that** the pressure-bearing outer polyethylene layer (16) is designed to be at least two-layered and comprises spirally wound reinforcing tapes (17, 18) made of polyethylene reinforced with glass fibers.

11. At least three-layered plastic pipe (10) according to any one of claims 1 to 10, **characterized in that** at least the first innermost layer (11) made of polyamide, the adhesion promoter layer (14), and the pressure-bearing outer third layer (16) are produced together in a coextrusion process.

12. At least three-layered plastic pipe (10) according to claim 11, **characterized in that** it comprises one or more further reinforcing layers which are subsequently applied onto the coextruded three-layered plastic pipe (10).

13. Method for producing a cohesive connection between two sections of a pipeline each consisting of at least one three-layered plastic pipe (10) according to any one of claims 1 to 12, **characterized in that** the concentrically arranged diffusion barrier layer (11) made of polyamide of both sections of the pipeline is removed, in particular cut back, at the respective pipe ends at the factory or on site, and thereafter a cohesive connection of the HDPE layers (16) of both sections of the pipeline is established, preferably by means of heated tool butt welding.

## Revendications

1. Tuyau en matière plastique (10) à au moins trois couches, comprenant au moins une première couche en polyamide (11) qui sert de couche barrière contre la diffusion, au moins une deuxième couche qui sert de couche d'agent de liaison (14), et au moins une troisième couche (16) en polyéthylène, dans lequel la couche barrière contre la diffusion (11) en polyamide forme la couche concentrique la plus interne, la couche de polyéthylène (16) est une couche externe porteuse de pression qui est constituée d'un polyéthylène haute densité (PEHD / HDPE), et dans lequel la deuxième couche, qui sert de couche d'agent de liaison (14), est disposée entre la couche barrière contre la diffusion (11) interne en polyamide et la couche externe porteuse de pression (16) en polyéthylène,
**caractérisé en ce que**
la couche barrière contre la diffusion (11) en polyamide, disposée de manière concentrique, présente une épaisseur de couche comprise entre 0,5 mm et 1,5 mm, et la troisième couche externe porteuse de pression en PEHD (16) présente une épaisseur de couche qui est d'au moins le double de l'épaisseur de couche de la couche barrière contre la diffusion (11).

2. Tuyau en matière plastique (10) à au moins trois couches selon la revendication 1, **caractérisé en ce que** la première couche la plus interne (11) comprend un polyamide non chargé.

3. Tuyau en matière plastique (10) à au moins trois couches selon la revendication 1 ou 2, **caractérisé en ce que** les au moins trois couches (11, 14, 16) du tuyau en matière plastique (10) sont liées entre elles de manière solide sur toute leur surface.

4. Tuyau en matière plastique (10) à au moins trois couches selon l'une des revendications 1 à 3, **caractérisé en ce que** la couche d'agent de liaison (14) est constituée d'un copolymère dont la structure moléculaire est basée sur une polyoléfine sur laquelle sont greffés des groupes anhydride maléique, ou d'un copolymère constitué d'une polyoléfine avec un acétate d'éthylène-vinyle modifié par un anhydride.

5. Tuyau en matière plastique (10) à au moins trois couches selon l'une des revendications 1 à 4, **caractérisé en ce que** la troisième couche externe porteuse de pression (16) comprend une couche de PEHD en un polyéthylène ayant une densité comprise dans la plage entre 940 et 970 kg/m³ selon la norme ISO 1183.

6. Tuyau en matière plastique (10) à au moins trois couches selon l'une des revendications 1 à 5, **caractérisé en ce que** la troisième couche externe porteuse de pression (16) comprend un PEHD ayant une contrainte de dimensionnement pour la résistance à long terme contre la surpression interne (résistance hydrostatique à long terme selon la norme ISO 9080) d'au moins 10 N/mm² pour une durée de service d'au moins 50 ans.

7. Tuyau en matière plastique (10) à au moins trois couches selon l'une des revendications 1 à 6, **caractérisé en ce que** la première couche barrière contre la diffusion (11), disposée de manière concentrique, comprend un polyamide ayant une densité supérieure à 1 000 et inférieure à 1 200 kg/m³ (ISO 1183, 23 °C), de préférence un polyamide 6, un polyamide 6.6 ou un polyamide 12 ou un polyamide 11.

8. Tuyau en matière plastique (10) à au moins trois couches selon l'une des revendications 1 à 7, **caractérisé en ce que** la couche barrière contre la diffusion (11) disposée de manière concentrique est constituée de polyamide chargé de nanocharges, en particulier à base de graphène, afin d'augmenter l'effet barrière contre l'hydrogène ou les hydrocarbures.

9. Tuyau en matière plastique (10) à au moins trois couches selon l'une des revendications 1 à 8, **caractérisé en ce que** la couche de polyéthylène externe porteuse de pression (16) est réalisée sous la forme d'au moins deux couches et comprend des bandes de renforcement (17, 18) en polyéthylène orienté enroulées de manière hélicoïdale.

10. Tuyau en matière plastique (10) à au moins trois couches selon l'une des revendications 1 à 9, **caractérisé en ce que** la couche de polyéthylène externe porteuse de pression (16) est réalisée sous la forme d'au moins deux couches et comprend des bandes de renforcement (17, 18) en polyéthylène armé de fibres de verre enroulées de manière hélicoïdale.

11. Tuyau en matière plastique (10) à au moins trois couches selon l'une des revendications 1 à 10, **caractérisé en ce que** au moins la première couche interne (11) en polyamide, la couche d'agent de liaison (14) et la troisième couche externe porteuse de pression (16) sont fabriquées ensemble dans un procédé de coextrusion.

12. Tuyau en matière plastique (10) à au moins trois couches selon la revendication 11, **caractérisé en ce que** celui-ci présente une ou plusieurs autres couches de renforcement qui sont appliquées ultérieurement sur le tuyau en matière plastique (10) à trois couches coextrudé.

13. Procédé de fabrication d'une liaison par fusion de matière entre deux tronçons d'une canalisation, constitués chacun d'au moins un tuyau en matière plastique (10) à au moins trois couches selon l'une des revendications 1 à 12, **caractérisé en ce que** la couche barrière contre la diffusion (11) en polyamide, disposée de manière concentrique, des deux tronçons de la canalisation est retirée, en particulier découpée, à l'usine ou sur le chantier, respectivement au niveau des extrémités des tuyaux, et ensuite, de préférence par soudage bout à bout par élément chauffant, une liaison par fusion de matière des couches de PEHD (16) externes des deux tronçons de la canalisation est réalisée.
